Europäisches Patentamt

European Patent Office

Office européen des brevets

(19)

(11) Numéro de publication : **0 468 845 A1**

## DEMANDE DE BREVET EUROPEEN

(12)

(21) Numéro de dépôt : **91401926.0**

(22) Date de dépôt : **10.07.91**

(51) Int. Cl.⁵ : **B23K 9/095,** B23K 37/02, B25J 9/06

(30) Priorité : **11.07.90 FR 9008830**

(43) Date de publication de la demande : **29.01.92 Bulletin 92/05**

(84) Etats contractants désignés : **CH DE ES GB IT LI SE**

(71) Demandeur : **COMMISSARIAT A L'ENERGIE ATOMIQUE 31-33, rue de la Fédération F-75015 Paris (FR)**

(72) Inventeur : **Detriche, Jean-Marie 6 La Gaillarderie F-78590 Noisy le Grand (FR)** Inventeur : **Micaelli, Alain 9 rue Durand Benech F-92260 Fontenay aux Roses (FR)**

(74) Mandataire : **Mongrédien, André et al c/o BREVATOME 25, rue de Ponthieu F-75008 Paris (FR)**

(54) **Procédé de pilotage d'un robot à bras mobile portant un outil déplacé le long d'une ligne de travail.**

(57)  Procédé de pilotage d'un robot mobile (1) le long d'une ligne de travail (19).

Le robot (1) comprend une base mobile (2) déplacée le long de la ligne de travail (17) et qui porte un bras (6) mobile porteur lui-même d'un outil (17) et d'un détecteur (18). En fonction du détecteur (18), le bras (6) est déplacé pour maintenir l'outil (17) sur la ligne de travail (19). Périodiquement, on effectue des mesures de la position du bras (6) par rapport à la base mobile et, en fonction de ces mesures, on fait varier les mouvements de la base (2) de façon que le bras (6) soit amené à se rapprocher d'un état jugé idéal de position par rapport à la base (2).

Application notamment aux robots de soudage.

EP 0 468 845 A1

FIG. 1

L'invention a trait à un procédé de pilotage d'un robot déplaçant un outil le long d'une ligne de travail et constitué essentiellement d'une base mobile sur un sol et d'un bras qui porte l'outil et qui est mobile par rapport à la base.

Un exemple de travail où un outil doit être déplacé par un robot le long d'une ligne est le soudage automatique. Il est possible dans certains cas, notamment quand les joints sont rectilignes, d'utiliser des robots roulant sur des rails de guidage. Le bras portant l'outil reste alors immobile sur la base roulante. Ce système est cependant inapplicable à des lignes de travail complexes et peu intéressant pour des installations de petites dimensions comprenant des robots portatifs.

Le robot dont les caractéristiques sont les plus proches de celles de l'invention est sans doute le RV 110 de la société Shin Meiwa. Il s'agit d'un petit robot destiné au soudage de raidisseurs sur chant à un panneau. Le robot est déplacé dans des alvéoles que délimitent quatre de ces raidisseurs en rectangle. Le bras porte en plus de l'outil de soudage un détecteur proche de l'outil et qui permet de suivre le raidisseur soudé. Le procédé de pilotage consiste à mouvoir la base en fonction des indications du détecteur de manière à suivre le raidisseur. La base est par ailleurs munie de capteurs de contact sur toutes ses faces. Quand elle heurte le raidisseur suivant, elle est temporairement arrêtée et le bras qui était jusque-là immobile par rapport à la base est déplacé angulairement de manière à achever la soudure au croisement des deux raidisseurs. Les roues sont ensuite orientées et la base déplacée le long du raidisseur qu'elle a touché de manière à pouvoir le souder à son tour, après avoir procédé à un dégagement approprié.

L'application du procédé selon l'invention permet d'effectuer des tâches analogues avec des caractéristiques supérieures en ce qui concerne notamment la souplesse de la commande du robot et donc la rapidité et la précision du travail, y compris pour des formes de joints compliquées.

L'idée de base consiste à déplacer continuellement le bras par rapport à la base en même temps que la base est déplacée sur le sol. Des robots qui comportent des mouvements simultanés de la base et d'un bras n'existent que dans d'autres domaines techniques, tels que la cueillette des fruits, dans lesquels les impératifs techniques sont tout à fait différents car les opérations accomplies sont discontinues et aléatoires si bien que les mouvements de la base et du bras sont entièrement indépendants. Dans l'invention, il faut en outre prévoir, pour un travail de bonne qualité, une coordination des mouvements de la base et du bras.

On définit pour cela à l'avance un état idéal du bras par rapport à la base et, au cours du travail, on repère périodiquement l'évolution de la position ou de l'état du bras par rapport à la base et on corrige les déplacements de la base pour amener progressivement le bras vers son état idéal. Cela implique que la trajectoire de la base sur le sol n'est pas définie à l'avance ni astreinte à un déroulement immuable par des rails ou un autre moyen de guidage.

On évite ainsi d'arriver à des états cinématiquement inadmissibles compte tenu des limites de débattement du bras par rapport à la base, et les virages rendus nécessaires par les variations globales de direction de la ligne de travail peuvent être abordés dans les meilleures conditions, sans devoir arrêter le robot ou le ralentir excessivement.

Une configuration plausible du robot comporte un bras tournant parallèlement au sol par rapport à la base et déployable d'un mouvement télescopique. Le bras peut en outre comprendre, à l'opposé de la base, un poignet tournant parallèlement au sol par rapport au reste du bras, le détecteur et l'outil étant portés par le poignet. Le poignet est continuellement déplacé par rapport au reste du bras pour placer l'outil à une orientation idéale par rapport à la ligne de travail.

Quelle que soit la constitution du bras, son état idéal correspond à un état précis de chacune des articulations ou plus généralement de chacun des degrés de liberté qu'il comporte. Avec un bras tournant et télescopique, l'état idéal correspond sensiblement à un bras déployé au maximum et orienté vers l'avant de la base avec une légère inclinaison du côté de la ligne de travail.

Le procédé peut comprendre deux variantes principales. Dans la première, la position idéale de la base, correspondant à l'état idéal du bras, est calculée au moment du repérage de la position réelle du bras par rapport à la base à ce moment. La distance entre la position idéale fictive et la position réelle de la base est évaluée par ses coordonnées polaires dans un repère lié à la base. La base subit alors un mouvement de correction qui la fait converger vers la position idéale. Ce mouvement peut favorablement faire évoluer la position de la base selon au moins une équation différentielle du deuxième degré d'une des coordonnées polaires de la distance en fonction du temps.

Les déplacements de la base peuvent également être corrigés, selon la seconde variante principale du procédé, à l'aide d'une modélisation de la ligne de travail. On prévoit alors la position idéale de la base à un moment ultérieur à l'instant de repérage et on fait converger la base vers la position idéale à cet instant ultérieur. Il est possible et avantageux que la portion de trajectoire convergeant vers cette position idéale ultérieure soit en forme de courbe du troisième degré tangente à la portion de trajectoire immédiatement précédente et parallèle à la modélisation de la ligne de travail à la position idéale ultérieure.

L'invention va maintenant être décrite plus en détail à l'aide des figures suivantes annexées à titre illustratif et non limitatif :
– la figure 1 représente un robot et une ligne de travail ;
– la figure 2 représente une configuration particulière de travail ;
– la figure 3 représente l'application de la première variante principale du procédé ; et
– la figure 4 représente l'application de la seconde variante principale du procédé.

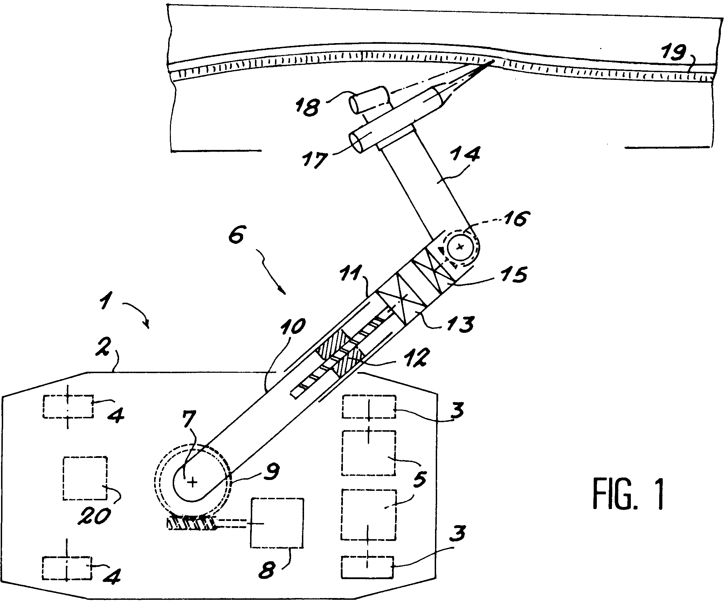

Le robot 1 de la figure 1 comprend une base 2 munie de deux roues motrices 3 à l'avant et de deux roues suiveuses 4 à l'arrière. Chacune des roues motrices 3 est mue par un moteur 5 indépendant. La base 2 porte un bras 6 à l'aide d'un pivot 7 qui permet au bras 6 de tourner dans un plan horizontal. Un moteur 8 muni d'une vis sans fin déplace en effet une roue dentée 9 liée au bras 6.

Le bras 6 est télescopique et se compose essentiellement de deux parties 10 et 11 coulissant l'une dans l'autre. L'une d'entre elles porte une crémaillère 12 et l'autre un moteur 13 commandant une vis sans fin qui engrène dans la crémaillère. Une clavette non représentée ou un assemblage analogue empêche les deux parties 10 et 11 du bras 6 de tourner l'une sur l'autre.

Le bras 6 comprend également un poignet 14 à l'opposé de la base 2. La partie 11 contient un moteur 15 muni d'une vis sans fin qui fait tourner une roue dentée 16 solidaire du poignet 14. Le poignet 14 tourne donc dans un plan horizontal et porte, côte à côte, une torche de soudage 17 et un détecteur 18 de la ligne de joint 19 qui fonctionne en utilisant des courants de Foucault. La ligne de joint 19 sur laquelle il faut souder peut être sinueuse, comporter des virages, et d'une façon générale être de forme quelconque. Avec le robot 1 représenté, il est nécessaire qu'elle soit située dans un plan, ici le plan du sol sur lequel roule le robot 1, mais on pourrait appliquer l'invention à des formes de joint plus complexes si le bras 6 avait des possibilités cinématiques plus grandes.

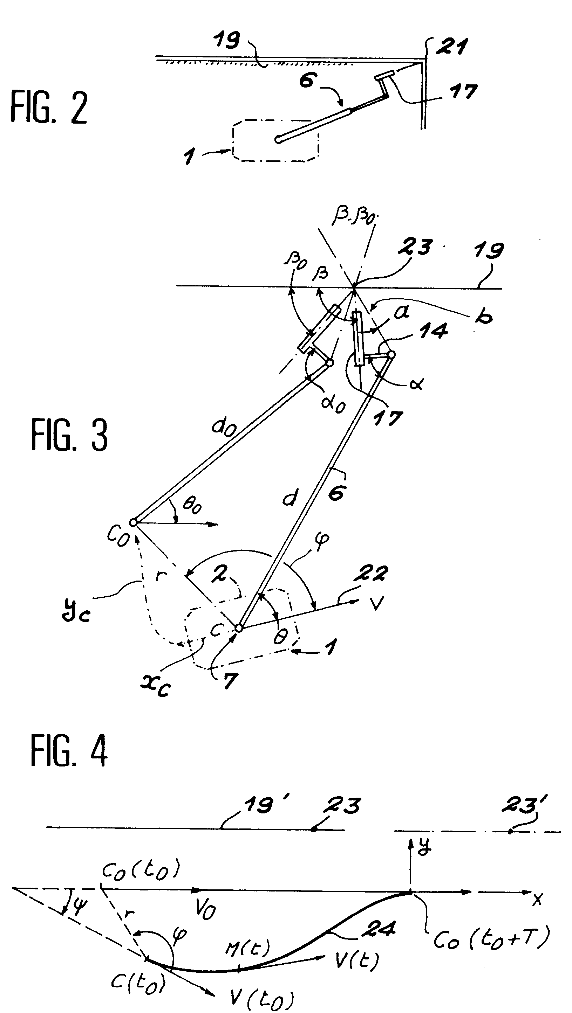

Un système de pilotage 20 non décrit en détail interprète les indications du détecteur 18 de manière à commander les moteurs 8, 13 et 15 pour maintenir la torche 17 au-dessus du joint 19 avec l'orientation correcte et les deux moteurs 5 pour la coordination des mouvements de la base 2. En effet, si la base 2 se déplaçait parallèlement à la direction moyenne de la ligne de joint 19, les sinuosités de celle-ci pourraient être compensées uniquement par des variations de l'état du bras 6, mais il faut en outre tenir compte des tournants de plus grande ampleur de la ligne de joint 19. C'est ce que représente la figure 2, dans laquelle le robot 1 arrive à une position pour laquelle la torche 17 se trouve à un angle 21 de la ligne de joint 19. Il est alors nécessaire de faire virer le robot 1. Or, dans de nombreux cas, la position et la forme de la ligne de joint 19 restent inconnues du système de pilotage 20, et il s'agit donc d'assurer les déplacements du robot 1 en se guidant uniquement sur les indications par tâtonnements du détecteur 18.

On peut procéder comme indiqué sur la figure 3. Les parties 10 et 11 du bras 6 font un angle $\theta$ par rapport à la direction avant du robot 1 symbolisée par la flèche 22 et ont une longueur totale déployée d. Le poignet 14 fait un angle $\alpha$ avec les parties 10 et 11. Le point de concours du poignet 14 et de la partie 11 est à une distance b de la ligne de joint 19 et plus précisément du point où s'effectue le soudage et la torche 17 fait un angle a avec la ligne joignant ces deux points et un angle $\beta$ avec la ligne de joint 19. a et b sont invariables, $\alpha$, $\beta$, $\theta$ et d sont par contre variables.

Il est souhaitable, pour assurer une bonne qualité de soudage, que l'angle $\beta$ soit à une valeur $\beta 0$ déterminée que l'on peut connaître indirectement à l'aide du détecteur 18. On définit par ailleurs des valeurs $\alpha_0$, $\theta_0$ et $d_0$ qui correspondent à un état jugé idéal du bras 6 par rapport à la base 2. Cet état est choisi à l'avance par l'utilisateur, mais on peut remarquer qu'il correspond de préférence à un état où le bras 6 est déployé environ à son maximum et dirigé vers l'avant 22 du robot 1 avec simplement une légère inclinaison vers le côté de la ligne de joint 19. Cette disposition permet de mieux anticiper les changements de direction de la ligne de joint 19 en offrant au robot 1 la possibilité de tourner avec de grands rayons de courbure et doit être comparée avec la disposition retenue pour le robot RV 110, dans lequel le bras est généralement orienté transversalement.

Si on appelle C le point situé à l'emplacement du pivot 7, le point analogue correspondant à l'état idéal du bras 6 dans la position où le même point 23 est soudé est appelé $C_0$. C'est un point de consigne qu'il faut s'efforcer de faire coïncider avec le point C, et ses coordonnées cartésiennes xc et yc dans un repère lié à la base 2, dont l'origine est le point C et dont un axe est dirigé vers l'avant 22 sont exprimées par les équations 1 et 2 :

$$x_c = d \cos\theta - d_0 \cos(\alpha - \alpha_0 + \theta + \beta - \beta_0) - 2b \sin\frac{\beta - \beta_0}{2} \cdot$$

$$\cdot \cos\left(\alpha + \theta - a + \frac{\beta - \beta_0}{2}\right) \tag{1}$$

$$y_c = d \sin\theta + d_0 \sin(\alpha - \alpha_0 + \theta + \beta - \beta_0) - 2b \sin\frac{\beta - \beta_0}{2} \cdot$$

$$\cdot \sin\left(\alpha + \theta - a + \frac{\beta - \beta_0}{2}\right) \tag{2}$$

Il est facile de transformer ces coordonnées cartésiennes $x_c$ et $y_c$ en coordonnées polaires r et $\phi$ qui ont davantage d'intérêt ici.

La centrale de pilotage 20 agit ensuite sur les moteurs 5 des roues motrices 3 pour effectuer un mouvement de correction faisant converger la position du point C vers le point de consigne $C_0$, à la base 2. Comme dans cette réalisation les roues motrices 3 ne sont pas directrices, les mouvements de rotation de la base 2 sont fournis par des vitesses différentielles aux roues motrices 3. De nombreuses solutions sont possibles, mais on préconise de faire varier les vitesses nécessaires à l'accomplissement du mouvement de correction de manière que les coordonnées polaires de la consigne $C_0$ par rapport au point C obéissent à des équations différentielles du deuxième degré par rapport au temps comme l'expriment les équations 3 et 4 :

$$\ddot{r} + a\dot{r} + kr = 0 \tag{3}$$

$$\ddot{\varphi} + a'\dot{\varphi} + k'\varphi = 0 \tag{4}$$

où a, k, a' et k' sont des constantes choisies par l'utilisateur en fonction des possibilités du véhicule.

On constate que les équations (3) et (4) sont découplées. Les coefficients peuvent être choisis de sorte que la correction angulaire intervienne plus vite que la correction en rayon. Par ailleurs, il est avantageux que ces équations soient représentatives d'un mouvement oscillatoire s'effectuant à l'amortissement critique, c'est-à-dire où $a = 1{,}4 \sqrt{k}$ et $a' = 1{,}4 \sqrt{k'}$. La convergence est alors rapide. On peut proposer d'autres algorithmes de convergence. L'équation différentielle (5)

$$\ddot{r} + a\dot{r} + kr^2 = 0 \tag{5}$$

est représentative d'un algorithme où on s'accommode d'une convergence assez lente si la distance entre C et $C_0$ est faible, mais où cette convergence est beaucoup plus rapide dans le cas contraire ; l'équation (6)

$$\ddot{r} + (a\dot{r} + kr) \cos^2\varphi = 0 \tag{6}$$

est représentative d'un mouvement de convergence sans découplage où on se préoccupe d'abord de placer le point de consigne $C_0$ vers l'avant ou vers l'arrière de la base 2 avant de le rapprocher du point C.

Le robot 1 converge ainsi continuellement vers son état idéal. Il n'est toutefois normalement pas question de l'atteindre car la progression de la torche 17 sur la ligne de joint 19 n'est pas interrompue, ce qui implique que le mouvement d'avance précédent de la base 2 est poursuivi. Les vitesses nécessaires aux mouvements de correction se superposent donc aux vitesses antérieures pour former des couplages de mouvements, et comme par ailleurs la forme du joint varie, on applique simplement pendant un laps de temps déterminé les corrections de vitesse calculées pour obtenir la convergence souhaitée, après quoi on fait un nouveau repérage où on calcule la nouvelle position de C et la nouvelle position de $C_0$, de nouveaux calculs sont entrepris pour déterminer le nouveau mouvement de convergence à appliquer et le système de pilotage 20 délaisse le reliquat du mouvement de convergence précédemment calculé. En d'autres termes, l'opération de convergence est sans cesse reprise et on se soucie moins de parvenir effectivement à l'état idéal que d'éviter les écarts trop importants avec cet état idéal.

Des aménagements peuvent être apportés au procédé. On peut par exemple fixer des seuils d'accélération autorisés ou utiliser un algorithme spécial si le bras 6 est trop éloigné de l'état idéal. Si par exemple la distance devient inférieure à un seuil, on peut envisager d'imposer à la base 2 une vitesse d'avance V minimale et une vitesse de rotation nulle.

Une autre façon de réaliser le procédé de l'invention est explicitée à l'aide de la figure 4. Comme précédemment, on est en train, au moment du repérage, de travailler sur un point 23 de la ligne de travail. Le pivot 7 est à un point C à l'instant $t_0$ du repérage et il se trouverait à un point idéal $C_0$ si le bras 6 était à l'état idéal.

Dans cette variante du procédé, une modélisation approchée de la ligne de joint 19, notée 19′ et qui peut consister en une ligne droite indiquant la direction de la ligne de joint 19 à cet endroit et passant par le point 23 dont la position est connue, a été enregistrée par le système de pilotage 20. On prévoit que le repérage suivant aura lieu à l'instant $t_0 + T$. Compte tenu de la vitesse actuelle $V(t_0)$ du robot 1, on prévoit que le point 23′ de la modélisation 19′ sera atteint. La position de ce point 23′ est calculée ainsi que le point $C_0(t_0 + T)$ correspondant à l'état idéal du bras à cet instant ultérieur : les points 23, 23′, $C_0(t_0)$ et $C_0(t_0 + T)$ forment un parallélogramme. Vo désigne la vitesse uniforme, parallèle à la modélisation 19′, que la base 2 devrait garder.

On fait converger le point $C(t_0)$ de la base 2 vers le point de consigne $C_0(t_0 + T)$ par une portion de trajectoire 24 aussi courte que possible compte tenu des possibilités d'évolution du robot 1. Il s'agit d'une portion de trajectoire 24 définie par une courbe du troisième degré tangente au point $C(t_0)$ à la portion de trajectoire qui a été parcourue juste auparavant et parallèle au point $C_0(t_0 + T)$ à la modélisation 19′. La vitesse $V(t_0)$ est corrigée pour converger vers $V_0$ en importance et en direction. L'équation de la portion de trajectoire 24 est définie par l'équation (7), où M(t) désigne la position de la base 2 à l'instant $(t_0+t)$ calculée dans le repère d'origine $C_0(t_0+T)$ et de vecteurs directeurs x et y, où x est colinéaire à $V_0$ :

$$M(t) = A3{\cdot}t^3 + A2{\cdot}t^2 + A1{\cdot}t + A0 \quad (7)$$

et on peut calculer ces coefficients A0 à A3 par les équations (8) à (11) :

$$A0 = \begin{vmatrix} -\, r.\ \cos\ (\varphi + \psi)\ -\ V_0\,.T \\ -\, r.\ \sin\ (\varphi + \psi) \end{vmatrix} \quad (8)$$

$$A1 = \begin{vmatrix} V(t_0)\,.\cos\ \psi \\ V(t_0)\,.\sin\ \varphi \end{vmatrix} \quad (9)$$

$$A2 = -3.A0/T^2 - 2.A1.T - \begin{vmatrix} V_0/T \\ 0 \end{vmatrix} \quad (10)$$

$$A3 = -A1/3T^2 - 2.A2/3T + \begin{vmatrix} V_0/3T^2 \\ 0 \end{vmatrix} \quad (11)$$

où $\psi$ désigne l'angle entre l'avant de la base 2 à l'état idéal du bras et à l'instant $t_0$ et l'avant de la base 2 dans sa position réelle au même instant. $\varphi$ et r sont définis comme sur la figure 3.

Comme dans la réalisation précédente, il n'est pas nécessaire de parcourir toute la portion de trajectoire 24 avant de procéder à un autre repérage. Ce nouveau repérage peut être effectué bien avant l'instant $t_0 + T$ et on recommence le processus de calcul d'une portion de trajectoire de raccordement.

Il est possible d'utiliser l'invention avec d'autres types de robots que les robots de soudage. On peut en particulier l'appliquer à des robots de nettoyage de la lisière d'une pièce.

**Revendications**

1. Procédé de pilotage d'un robot (1) pour déplacer un outil (17) le long d'une ligne de travail (19), le robot étant constitué d'une base mobile (2) sur un sol et d'un bras mobile (6) sur la base (2), le bras (6) portant l'outil (17) ainsi qu'un détecteur (18) de la ligne de travail (19), la base (2) étant continuellement déplacée à côté de la ligne de travail (19) de manière à maintenir l'outil (17) sur la ligne de travail (19) à l'aide du détecteur (18), caractérisé en ce qu'il consiste à déplacer continuellement le bras (6) par rapport à la base (2) pendant que la base (2) est déplacée sur le sol, à repérer périodiquement l'état du bras (6) par rapport à la base (2) et à corriger les déplacements de la base (2) pour ramener progressivement le bras (6) vers un état idéal, défini à l'avance, par rapport à la base (2).

2. Procédé de pilotage d'un robot selon la revendication 1, caractérisé en ce que le bras (6) tourne parallèlement au sol par rapport à la base (2) et est télescopique.

3. Procédé de pilotage d'un robot selon la revendication 2, caractérisé en ce que le bras (6) comprend, à l'opposé de la base (2), un poignet (14) tournant parallèlement au sol par rapport au reste du bras (10, 11), le détecteur (18) et l'outil (17) étant portés par le poignet (14), le poignet (14) étant continuellement déplacé par rapport au reste du bras (10, 11) pour placer l'outil (17) à une orientation idéale par rapport à la ligne de travail (19).

4. Procédé de pilotage d'un robot selon l'une quelconque des revendications 2 ou 3, caractérisé en ce que l'état idéal du bras (6) correspond sensiblement à un bras déployé au maximum et orienté vers l'avant de la base (2), avec une légère inclinaison du côté de la ligne de travail (19).

5. Procédé de pilotage d'un robot selon l'une quelconque des revendications 1 à 4, caractérisé en ce que les déplacements de la base (2) sont corrigés en évaluant, aux instants de repérage de la position du bras (6) par rapport à la base (2), la position idéale de la base qui correspondrait à l'état idéal du bras par rapport à la position réelle de la base au même instant, à évaluer la distance entre la position idéale et la position réelle par ses coordonnées polaires dans un repère lié à la base et à faire effectuer à la base un mouvement de correction convergeant vers la position idéale.

6. Procédé de pilotage d'un robot selon la revendication 5, caractérisé en ce que le mouvement de correction fait évoluer la distance entre la position réelle de la base par rapport à la position idéale selon au moins une équation différentielle du deuxième degré d'une des coordonnées polaires de la distance en fonction du temps.

7. Procédé de pilotage d'un robot selon la revendication 4, caractérisé en ce que l'équation différentielle correspond à un mouvement oscillatoire à l'amortissement critique.

8. Procédé de pilotage d'un robot selon l'une quelconque des revendications 1 à 4, caractérisé en ce que les déplacements de la base sont corrigés en évaluant, grâce à une modélisation (19') de la ligne de travail (19), la position idéale de la base à un instant ultérieur à l'instant de repérage, et en faisant converger la base vers la position idéale à cet instant ultérieur.

9. Procédé de pilotage d'un robot selon la revendication 8, caractérisé en ce que la base converge vers la position idéale en suivant une portion de trajectoire en forme de courbe du troisième degré tangente à une portion de trajectoire précédant immédiatement et parallèle à la modélisation de la ligne de travail à la position idéale.

10. Procédé de pilotage d'un robot selon la revendication 2 et l'une quelconque des revendications 5 à 9, caractérisé en ce que la position réelle et la position idéale de la base sont définies par la position réelle et la position idéale du point d'attache (7) du bras (6) à la base (2).

FIG. 1

EP 0 468 845 A1

FIG. 2

FIG. 3

FIG. 4

Office européen
des brevets

**RAPPORT DE RECHERCHE EUROPEENNE**

Numero de la demande

EP 91 40 1926

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | TECHNICA no. 12, 1980, pages 1037-1054, Zürich, CH; G.W. KöHLER: "Industrie-Roboter" * page 1037; figures 1,2 * --- | 1 | B 23 K 9/095 B 23 K 37/02 B 25 J 9/06 |
| Y | ROBOTERSYSTEME vol. 5, no. 4, décembre 1989, pages 213-218; Berlin, DE; P. DREWS et al.: "Echtzeit-Bahnplanung eines Roboters unter Sensoreinsatz" * pages 216-217; figures 5-8 * --- | 1,2 | |
| Y | EP-A-0 185 233 (MESSER GRIESHEIM GMBH) * revendications 1,4; figure 2 " | 2 | |
| A | --- | 3 | |
| A | WO-A-8 301 407 (UNITED STATES ROBOTS, INC.) * figures 1,2 * ----- | 2 | |

**DOMAINES TECHNIQUES RECHERCHES (Int. Cl.5)**

B 23 K

Le présent rapport a été établi pour toutes les revendications

| Lieu de la recherche | Date d'achèvement de la recherche | Examinateur |
|---|---|---|
| BERLIN | 11-10-1991 | WUNDERLICH J E |

EPO FORM 1503 03.82 (P0402)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant